# EUROPEAN PATENT APPLICATION

(11) **EP 3 406 957 A1**
(43) Date of publication of application: **28.11.2018**
(21) Application number: 17173084.9
(22) Date of filing: 26.05.2017
(51) Int. Cl.: F16M 11/04, F16M 13/02

(54) **ADJUSTMENT ASSEMBLY FOR ADJUSTING A SMART BOARD ONTO A WALL**

(71) Applicant: Vestel Elektronik Sanayi ve Ticaret A.S., 45030 Manisa (TR)
(72) Inventor: AVCILAR, Ismail, 45030 Manisa (TR)
(74) Representative: Ascherl, Andreas

(57) **Abstract**

An adjustment assembly (1) for assembling a smart board device (9) to a wall (10), the adjustment assembly (1) comprising a first part (2) comprising a holding provision (4) for holding the smart board device (9), and a first connection mechanism (6), and a second part (3) comprising an affixing mechanism (5) for affixing the second part (3) onto the wall (10) and a second connection mechanism (7) which is complimentary to the first connection mechanism (6), such that the first connection mechanism (6) and second connection mechanism (7) forms a mechanical coupling, wherein when the first connection mechanism (6) and the second connection mechanism (7) forms the mechanical coupling, the mechanical coupling provides for a displacement range (8) between the first part (2) and the second part (3), such that the first part (2) is adapted to move between the displacement range (8) when the mechanical coupling is formed.

## Description

This invention refers to an adjustment assembly according to claim 1, a first part according to claim 9, and a second part according to claim 13.

### Background of the Invention

In today's time, multiple machines have smart boards for controlling of machines. At the same time, PDA's, Tablets, Mobile Phones, which are general purpose computing machines, and many times used for communication have screens which works as smart board. It is difficult to hold these smart boards always in hand for operation, and they are required to be placed at a convenient place so that it is easy to operate on them while being indulged with the machines or taking care of other activities where these smart boards are used. Few of the most common examples are navigating on mobile phones while driving, video conferencing through tablets or mobile phones sitting at a distance from the device, etc.

For optimal handling of the mobile phones they should be kept straight on a wall facing the user of the smart board. Otherwise there can be some technical problems while operating touch screen of the smart board or reflection on the screen rendering improper viewing of the data or media on the screen of the smart board, etc. Sometimes these walls or basis are not straight, especially while driving in the car, when the mobile phone is required to be affixed on a wind screen for handling or navigating, since for example the wind screen of a car is slanted.

Prior art US Patent Application US13/339,531 discloses a suspension structure which can be provided on a display panel and/or a supporting base of the display panel to suspend the flat display device on a stationary article such as wall, roof, and furniture and so on, to achieve a suspended display device. The suspension structure may one or more of the following components: hooks, loops, wires, and grooves for suspension, projections for suspension, and the like. These components can cooperate with a stationery structure on the stationery article 9 (such as nails, loops, sticks, grooves or projections) to suspend the flat display device. This prior art only mentions a suspension of the display device, however, it does not disclose an adjusting of the display device according to convenience of the user.

Chinese Patent Application CN20101179521 discloses an ultra-thin television wall hanger, which comprises a wall body fixed piece and a television fixed piece. The wall body fixed piece is used for connecting to a wall body, and the television fixed piece is used for connecting a television, wherein the wall body fixed piece is provided with a wall body connecting end, the television fixed piece comprises a hanging rod and a positioning block; the positioning block is arranged on the hanging rod, the positioning block is provided with a television connecting end, the wall body fixed piece is provided with a hanging rod placement groove, the hanging rod is movably arranged in the hanging rod placement groove, and the hanging rod is slid in the hanging rod placement groove to ensure that the television fixed piece turns forward and backward relative to the wall body fixed piece. The hanging rod is movably arranged in the hanging rod placement groove so as to enable the television to turn with a certain angle through the turning motion of the hanging rod in the hanging rod placement groove; therefore, a user is convenient to plug a power line. This prior art has a disadvantage, since it is only able to move the television in smaller angles, which can be only sufficient for purpose of convenience of plugging power line, however, insufficient for operating the smart boards. This wall hanger is inappropriate for the cases where the slant in the wall is higher, especially in cases of a windscreen of a car.

### Object of the Invention

It is therefore the object of the present invention is to provide a adjustment assembly for adjusting a smart board with respect to a wall on which the smart board is mechanically coupled.

### Description of the Invention

The before mentioned object is solved by an adjustment assembly according to claim 1, a first part according to claim 9, and a second part according to claim 13.

An adjustment assembly for assembling a smart board device to a wall, the adjustment assembly comprising a first part having a holding provision for holding the smart board device, and a first connection mechanism, a second part having a affixing mechanism for affixing the second part onto the wall, and a second connection mechanism which is complimentary to the first mechanism, such that the first connection mechanism and second connection mechanism forms a mechanical coupling, wherein when the first connection mechanism and the second connection mechanism forms the mechanical coupling, the mechanical coupling provides for a displacement range between the first part and the second part, such that the first part is adapted to move between the displacement range when the mechanical coupling is formed.

This provides an adjustment assembly for adjusting the smart board easily with respect to the wall on which it is placed. The assembly is a simple structure, where mechanical coupling of the parts is itself further used for adjusting the smart board with respect to the wall. When the wall is not straight, the first part can move through the displacement range to keep the smart board straight, so that it can counter any slant of the wall.

Further preferred embodiments are subject-matter of dependent claims and/or of the following specification parts.

According to a preferred embodiment of the adjustment assembly, wherein one of the first part or the second part is a male part and the other part is a female part, such that the mechanical coupling can be formed by inserting male part into the female part.

This embodiment is beneficial as it provides an easy way to form the mechanical coupling which provides stregth and stability to the mechanical coupling.

According to a further preferred embodiment of the adjustment assembly, wherein the displacement range is the length of the male part.

This embodiment is helpful, as it provides for an embodiment of the assembly which can work for a female part which has depth more than equal to the length of the male part, hence providing a wide range of female parts which can work with the male part to provide a substantial displacement range to move the first part.

According to a further preferred embodiment of the system, wherein the male part and female part has complimentary threads, such that the mechanical coupling is formed by screwing the parts together.

This embodiment is beneficial, as it provides for guiding of female part into the male part, and further provide stability to the mechanical coupling.

According to another embodiment of the system, wherein the female part comprises a stopper which is provided inside the female part at its periphery, and the male part comprises a protrusion at one of its periphery, such that when the male part is inserted into the female part, the male part forcefully enters the female part to cross over the protrusion through the stopper, wherein when the male part inserts into the female part through the stopper, the male part is adapted to move into the female part to and fro deep inside the female part and up to a point when the stopper is reached by the protrusion, the depth up to which the male member travels and the point when the stopper is reached by the protrusion forms the displacement range for moving the first part.

This embodiment is beneficial, as it provides another form of mechanical coupling which provides safe movement of the first part up to the maximum range due to the stopper and protrusion arrangement, and also due to protrusion in the male part the movement of the male part into the female part is with regular checks and not free flow, which further provide efficiency in displacing the parts to achieve optimal adjustment, and further helps to keep that adjustment stable.

According to a further embodiment of the adjustment assembly, wherein the male part is having protrusion at its tip.

This embodiment is beneficial, as it provides for maximum utilization of length of the male part for the displacement range.

According to an additional embodiment of the adjustment assembly, wherein the first part is the female part, and the second part is the male part.

This embodiment is beneficial, as it provides for a mechanical coupling which is user friendly, as it provides for quicker placement of the first part onto the second part, as it is easier to guide in the female part into a fixed the male part, than vice-versa. Also, first part being female part provides strength to the mechanical coupling.

According to a further embodiment of the system, wherein the holding provision is a screw, such the first part is screwed into the smart board device.

This embodiment is beneficial, as it provides an easy and stable mechanism to fix the first part to the smart board device.

The before mentioned object is also solved by a first part of claim 9, which is adapted to be coupled to a second part for forming an adjustment assembly to assemble a smart board device to a wall.

The first part comprising a holding provision for holding the smart board device, and a first connection mechanism, wherein second part comprising a affixing mechanism for affixing the second part onto the wall and a second connection mechanism which is complimentary to the first mechanism, such that the first connection mechanism and second connection mechanism forms a mechanical coupling, wherein when the first connection mechanism and the second connection mechanism forms the mechanical coupling, the mechanical coupling provides for a displacement range between the first part and the second part, such that the first part is adapted to move between the displacement range when the mechanical coupling is formed.

According to a further preferred embodiment of the first part, wherein the first part is a female part and the second part is a male part, such that the mechanical coupling can be formed by inserting male part into the female part.

According to another embodiment of the first part, wherein the first part has threads complimenting threads of the second part, such that the mechanical coupling is formed by screwing the first part onto the female part.

According to a further embodiment of the first part, wherein the holding provision is a screw, such the first part is screwed into the smart board device.

The before mentioned object is also solved by a second part of the claim 13, which is adapted to be coupled to a first part for forming an adjustment assembly to assemble a smart board device to a wall, wherein the first part comprising a holding provision for holding the smart board device, and a first connection mechanism.

The second part comprising an affixing mechanism for affixing the second part onto the wall, and a second connection mechanism which is complimentary to the first mechanism, such that the first connection mechanism and second connection mechanism forms a mechanical coupling, wherein when the first connection mechanism and the second connection mechanism forms the mechanical coupling, the mechanical coupling provides for a displacement range between the first part and the second part, such that the first part is adapted to move between the displacement range when the mechanical coupling is formed.

According to a further embodiment of the second part, wherein the second part is a male part and the first part is the female part, such that the mechanical coupling can be formed by inserting male part into the female part, and wherein the displacement range is the length of the second part.

According to another embodiment of the second part, wherein the second part has threads complimenting threads of the first part, such that the mechanical coupling is formed by screwing the first part onto the second part.

Further benefits, goals and features of the present invention will be described by the following specification of the attached figures, in which components of the invention are exemplarily illustrated. Components of the devices and method according to the inventions, which match at least essentially with respect to their function, can be marked with the same reference sign, wherein such components do not have to be marked or described in all figures.

The invention is just exemplarily described with respect to the attached figure in the following.

### Brief Description of the Drawings

Fig. 1 shows a first part and a second part which are coupled together to form an assembly for affixing a smart board device to a wall adjustably.
Fig. 2 shows affixing of the smart board device to the wall using the adjustable assembly.
Fig. 3 shows the first part and the second part having stopper and protrusion respectively.

### Detailed Description of the Drawings

Current invention focuses on affixing a smart board device to a wall, in such a way that distance between the wall and the smart board device can be adjusted. A user shall like to adjust the smart board as per his convenience when it is affixed to the wall, which current invention facilitates. Moreover, in cases, when the wall is sloppy, like window screen of the car, adjusting of the distance is a necessity, so as to counter the slope of the wall to keep the device straight.

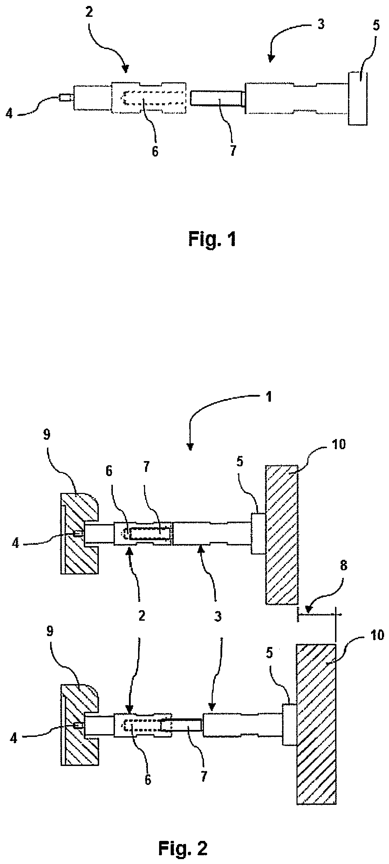

Fig. 1 shows a first part 2 and a second part 3 which are having provisions to be connected to form an assembly 1. The first part 2 has a first connection mechanism 6, and the second part has a second connection mechanism 7. The connection mechanisms 6, 7 are complimentary to each other, and when connected to each other, they form a mechanical coupling.

When the first connection mechanism 6 and the second connection mechanism 7 are connected and they form the mechanical coupling, the mechanical coupling provides for a displacement range between the first part 2 and the second part 3. The first part 3 moves between the displacement range, so as to provide adjustment of the smart board device to the wall.

The first part 2 is the female part and the second part 3 is a male part. However, in an alternate embodiment, the first part 2 can be the male part, and the second part 3 can be the female part. However, to provide strength and stability to the adjustment assembly, it is preferred to have the first part 2 as female part, and the second part 3 as the male part.

In one embodiment, the adjustment assembly can use complete length of the male part as the displacement range for the first part 2 to move. This provides for maximum utilization of available length of the male part for adjustment of the smart board device. However, in yet another embodiment, only a portion of the male part is to be used for displacement range, especially in the case where the smart bard device is heavier, so that strength and stability of the adjustment assembly can be maintained.

In one embodiment, the male part and female part has complimentary threads, such that the mechanical coupling is formed by screwing the parts together. In an alternate embodiment, the assembly can also be established by using a female part which is made of a material having certain amount of flexibility, and whose periphery is equal to or lesser than the diameter of the male part, so that the female part moves onto the male part with substantial force, and also further the movement of the first part 2 over the displacement range can be achieved by applying substantial force. However, strength and stability of the mechanical coupling of this embodiment is lesser than the previous embodiment, where the parts were having complimentary threads.

The first part 2 also includes a holding provision 4, so that it can hold the smart board device using the holding provision 4.

The second part 3 also includes an affixing mechanism 5 for affixing the second part onto the wall.

As the second part 3 is to be affixed to the wall, hence when the mechanical coupling is adjusted, only the first part 2 is adapted to be moved through the displacement range.

Fig. 2 shows the assembling of the smart board device 9 to the wall 10 using the adjustment assembly 1 of the two parts 2, 3. The first part 2, which is a female part, is screwed into the smart board device through a screw 4, and the second part 3, which is a male part, is affixed to the wall 10 using the affixing mechanism. The first part 2 can move onto the second part 3 up to the displacement range 8.

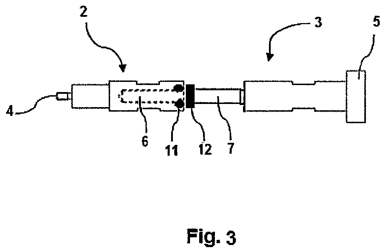

Fig. 3 shows the first part 2 and the second part 3 having a stopper 11 and a protrusion 12 respectively. The first part 2 is the female part and the second part 3 is the male part. The first part 2 includes a stopper 11 which is provided inside the first part 2 at its periphery. While the male part includes a protrusion 12 at its tip. In an alternate embodiment, the protrusion 12 can be provided along the length of the second part 3 at its periphery.

The second part 3 is to be inserted into the first part 2, and the second part 2 forcefully enters the first part 2 to cross over the protrusion 12 through the stopper 11. Once the second part 3 inserts into the first part 2 through the stopper 11, the second part 3 can move into the first part 2, to and fro, deep inside the first part 2 and up to a point when the stopper 11 is reached by the protrusion 12. The depth up to which the second part 3 can travel and the point when the stopper 11 is reached by the protrusion 12 forms the displacement range for moving the first part 2.

Thus, the present invention provides for affixing of smart board device 9 onto a wall 10 adjustably, so that a user of the smart board device 9 can adjust the distance of the smart board device 9 to the wall 10, which is sometimes necessary also in cases when the wall 10 is slanted, so that the smart board device 9 can be kept straight while in use.

The present invention provides an adjustment assembly 1 for assembling the smart board device 9 to the wall 10, the adjustment assembly 1 comprising a first part 2 comprising a holding provision 4 for holding the smart board device 9, and a first connection mechanism 6, and a second part 3 comprising an affixing mechanism 5 for affixing the second part 3 onto the wall 10 and a second connection mechanism 7 which is complimentary to the first connection mechanism 6, such that the first connection mechanism 6 and second connection mechanism 7 forms a mechanical coupling, wherein when the first connection mechanism 6 and the second connection mechanism 7 forms the mechanical coupling, the mechanical coupling provides for a displacement range 8 between the first part 2 and the second part 3, such that the first part 3 is adapted to move within the displacement range 8 when the mechanical coupling is formed.

### List of reference numbers

- 1: adjustment assembly
- 2: first part
- 3: second part
- 4: holding provision
- 5: affixing mechanism
- 6: first connection mechanism
- 7: second connection mechanism
- 8: displacement range
- 9: smart board device
- 10: wall
- 11: stopper
- 12: protrusion

## Claims

1. An adjustment assembly (1) for assembling a smart board device (9) to a wall (10), the adjustment assembly (1) comprising:
- a first part (2) comprising a holding provision (4) for holding the smart board device (9), and a first connection mechanism (6);
- a second part (3) comprising an affixing mechanism (5) for affixing the second part (3) onto the wall (10) and a second connection mechanism (7) which is complimentary to the first connection mechanism (6), such that the first connection mechanism (6) and second connection mechanism (7) forms a mechanical coupling,
wherein when the first connection mechanism (6) and the second connection mechanism (7) forms the mechanical coupling, the mechanical coupling provides a displacement range (8) between the first part (2) and the second part (3), such that the first part (2) is adapted to move in between the displacement range (8) when the mechanical coupling is formed.

2. The adjustment assembly (1) according to claim 1, wherein one of the first part (2) or the second part (3) is a male part and the other part is a female part, such that the mechanical coupling can be formed by inserting male part into the female part.

3. The adjustment assembly (1) according to claim 2, wherein the displacement range (8) is the length of the male part.

4. The adjustment assembly (1) according to any of the claims 2 or 3, wherein the male part and female part has complimentary threads, such that the mechanical coupling is formed by screwing the parts together.

5. The adjustment assembly (1) according to the claim 2, wherein the female part comprises a stopper (11) which is provided inside the female part at its periphery, and the male part comprises a protrusion (12) at one of its periphery, such that when the male part is inserted into the female part, the male part forcefully enters the female part to cross over the protrusion (12) through the stopper (11), wherein when the male part inserts into the female part through the stopper (11), the male part is adapted to move into the female part to and fro deep inside the female part and up to a point when the stopper (11) is reached by the protrusion (12), the depth up to which the male part travels and the point when the stopper (11) is reached by the protrusion (12) forms the displacement range (8) for moving the first part (2).

6. The adjustment assembly (1) according to the claim 5, wherein the male part is having the protrusion (12) at its tip.

7. The adjustment assembly (1) according to any of the claims 2 to 6, wherein the first part (2) is the female part, and the second part (3) is the male part.

8. The adjustment assembly (1) according to any of the claims 1 to 9, wherein the holding provision (4) is a screw, such the first part (2) is screwed into the smart board device (9).

9. A first part (2) to be coupled to a second part (3) for forming an adjustment assembly (1) to assemble a smart board device (9) to a wall (10), the first part (2) comprising a holding provision (4) for holding the smart board device (9), and a first connection mechanism (6),
wherein second part (3) comprising an affixing mechanism (5) for affixing the second part (3) onto the wall (10) and a second connection mechanism (7) which is complimentary to the first connection mechanism (6), such that the first connection mechanism (6) and second connection mechanism (7) forms a mechanical coupling,
wherein when the first connection mechanism (6) and the second connection mechanism (7) forms the mechanical coupling, the mechanical coupling provides for a displacement range (8) between the first part (2) and the second part (3), such that the first part (2) is adapted to move between the displacement range (8) when the mechanical coupling is formed.

10. The first part (2) according to claim 8, wherein the first part (2) is a female part and the second part (3) is a male part, such that the mechanical coupling can be formed by inserting male part into the female part.

11. The first part (2) according to claim 9, wherein the first part (2) has threads complimenting threads of the second part (3), such that the mechanical coupling is formed by screwing the first part (2) onto the second part (3).

12. The first part (2) according to any of the claims 9 to 11, wherein the holding provision (4) is a screw, such that the first part (2) is screwed into the smart board device (9).

13. A second part (3) to be coupled to a first part (2) for forming an adjustment assembly (1) to assemble a smart board device (9) to a wall (10), wherein the first part (2) comprising a holding provision (4) for holding the smart board device (9), and a first connection mechanism (6), the second part (3) comprising
- an affixing mechanism (5) for affixing the second part (3) onto the wall (10); and
- a second connection mechanism (7) which is complimentary to the first connection mechanism (6), such that the first connection mechanism (6) and the second connection mechanism (7) forms a mechanical coupling,
wherein when the first connection mechanism (6) and the second connection mechanism (7) forms the mechanical coupling, the mechanical coupling provides for a displacement range (8) between the first part (2) and the second part (3), such that the first part (2) is adapted to move between the displacement range (8) when the mechanical coupling is formed.

14. The second part (3) according to claim 13, wherein the second part (3) is a male part and the first part (2) is the female part, such that the mechanical coupling can be formed by inserting male part into the female part, and wherein the displacement range (8) is the length of the second part (3).

15. The second part (3) according to claim 13, wherein the second part (3) has threads complimenting threads of the first part (2), such that the mechanical coupling is formed by screwing the first part (2) onto the second part (3).
